(19) **Europäisches Patentamt**

**European Patent Office**

**Office européen des brevets**

(11) **EP 0 554 479 B1**

(12) **EUROPÄISCHE PATENTSCHRIFT**

(45) Veröffentlichungstag und Bekanntmachung des Hinweises auf die Patenterteilung:
**23.04.1997 Patentblatt 1997/17**

(51) Int Cl.$^6$: **G05B 13/02**

(21) Anmeldenummer: **92101818.0**

(22) Anmeldetag: **04.02.1992**

(54) **Verfahren zur Regelung von technischen Prozessen mit mehreren Reglern**

Method for controlling technical processes with several controllers

Procédé de régulation de processus techniques avec plusieurs régulateurs

(84) Benannte Vertragsstaaten:
**AT BE CH DE DK ES FR GB GR IT LI**

(43) Veröffentlichungstag der Anmeldung:
**11.08.1993 Patentblatt 1993/32**

(73) Patentinhaber: **SIEMENS AKTIENGESELLSCHAFT**
**80333 München (DE)**

(72) Erfinder:
• **Tautz, Wilfried, Dr.-Ing.**
**W-8550 Forchheim (DE)**
• **Weihrich, Georg, Dr.-Ing.**
**W-8525 Uttenreuth (DE)**

(56) Entgegenhaltungen:
**EP-A- 0 489 913        DE-A- 3 811 086**
**DE-A- 4 040 360**

• **PATENT ABSTRACTS OF JAPAN vol. 16, no. 5 (P-1295)8. Januar 1992 & JP-A-32 28 101**
• **PROCEEDINGS OF THE 1987 AMERICAN CONTROL CONFERENCE Bd. 3, 10. Juni 1987, MINNEAPOLIS US Seiten 1662 - 1668 R.S. ORNEDO ET AL. 'DESIGN AND EXPERIMENTAL EVALUATION OF AN AUTOMATICALLY RECONFIGURABLE CONTROLLER FOR PROCESS PLANTS'**

## Beschreibung

Die vorliegende Erfindung bezieht sich auf ein Verfahren zur Regelung von technischen Prozessen mit mehreren Reglern, wobei das Verhalten dieser Prozesse deutlich vom jeweils aktuellen Betriebspunkt abhängig ist. Betriebspunkte lassen sich beschreiben durch meist mehrere, nicht mit der eigentlichen Regelgröße korrelierte Größen, den sogenannten Betriebspunktparametern, welche fest oder veränderbar vorgegeben sind. Beispiele für derartige Prozesse sind die Bandzugregelung bei Haspelantrieben, die Elektrodenregelung bei Lichtbogenöfen, die Regelung von Turbogeneratoren oder die Regelung des Prozesses zur Zementherstellung. Werden in den unterschiedlichen Betriebspunkten gleichbleibend gute Regelungsergebnisse angestrebt, so erfordert dies eine geeignete Anpassung der Regelungseinrichtung für den jeweils aktuellen Betriebspunkt.

Man könnte daran denken, für einzelne Betriebspunkte jeweils einen entsprechend angepaßten Regler vorzusehen und nur mit diesem in der jeweiligen Betriebspunktumgebung zu arbeiten. Um den interessierenden Arbeitsbereich abzudecken, wäre dann aber eine oft unerträglich hohe Anzahl von Einzelreglern erforderlich, und es stellt sich das Problem des kontinuierlichen Übergangs von dem einen zu dem ihn ablösenden Regler.

Aus der EP 0 489 913 sind bekannt zum einen eine Fuzzyregeleinrichtung, bei der eine Umschaltung des Fuzzyregelwerkes möglich ist, und zum anderen eine aus einer Vielzahl von parallelen Reglern bestehende Regeleinrichtung, bei der eine Aktivierung bzw. Deaktivierung einzelner paralleler Regler mit Hilfe einer Fuzzysteuerung möglich ist. Bei der letztgenannten Regeleinrichtung werden die Ausgangssignale der einzelenen Regler vor einer Zusammenfassung zu einem Summensignal mit Hilfe von vorgeschalteten Koeffizientenelementen bewertet, so daß der Grad des Eingriffs eines jeden einzelnen Reglers einstellbar ist. Zur Bestimmung der Faktoren für diese Einstellung wird einer Fuzzysteuerung der Istwert der jeweiligen Regelgröße als Eingangswert zugeführt.

Aufgabe der Erfindung ist es, ein Verfahren anzugeben, mit welchem bei Betriebspunktveränderungen ein weicher, allmählicher Übergang von einem Regler zum anderen unter berücksichtigung aller relevanten Eigenschaften des Prozeßverhaltens erreicht wird. Die se Aufgabe wird erfindungsgemäß mit den im Hauptanspruch angegebenen Maßnahmen gelöst. Grundgedanke der Erfindung ist es, bei den einzelnen parallel arbeitenden Reglern den Grad ihrer Beteiligung am Regelungsgeschehen vom Abstand zwischen dem ihnen jeweils zugeordneten Betriebspunkt und dem aktuellen Betriebspunkt abhängig zu machen. Damit kann eine "interpolierende" Reglerbeteiligung bzw. Reglerumschaltung erreicht und das Netz der ausgewählten Betriebspunkte verhältnismäßig weitmaschig angelegt werden.

Die Auswahl der dominanten Parameter, die zur Festlegung der Betriebspunkte herangezogen werden sollen, richtet sich nach dem technologischen Hintergrund des Prozesses. Sie sollten den Prozeß signifikant beeinflussen, so daß sich ausgeprägte Abhängigkeiten des Prozeßverhaltens von diesen Parametern ergeben. Bei r solchermaßen als dominant bewerteten Betriebspunktparametern liegen die möglichen Betriebspunkte des Prozesses in einem r-dimensionalen Raum, den diese Betriebspunktparameter aufspannen. In den Gebieten dieses r-dimensionalen Raumes, in denen das Prozeßverhalten stark von diesen Parametern abhängt, sollten die Abstände zwischen den Betriebspunkten geringer sein als in den Gebieten, in denen die Abhängigkeiten weniger stark sind. Dadurch wird erreicht, daß alle relevanten Eigenschaften des Prozeßverhaltens genügend genau erfaßt werden. Die Gewichtung der einzelnen Reglereingriffe kann anhand von empirisch oder modellmäßig gefundenen Funktionen mit den dominanten Betriebspunktparametern als Variablen erfolgen und beispielsweise mittels entsprechender Kennlinien realisiert werden.

Näheres zur Erfindung samt ihren weiteren Ausgestaltungen, welche in Unteransprüchen wiedergegeben sind, soll nachstehend anhand der Figuren veranschaulicht werden. Es zeigen

Figur 1      das Blockschaltbild eines nach dem erfindungsgsgemäßen Verfahren arbeitenden Regelkreises,

Figur 2      eine beispielhafte Darstellung für Zugehörigkeitsfunktionen bei drei Betriebspunkten und zwei dominanten Betriebspunktparametern,

Figur 3      eine beispielhafte Anwendung des erfindungsgemäßen Verfahrens bei der Zugregelung für einen Haspelantrieb mit drei dominanten Betriebspunktparametern und zwei weiteren Betriebspunktparametern für die Adaption der Reglerparameter.

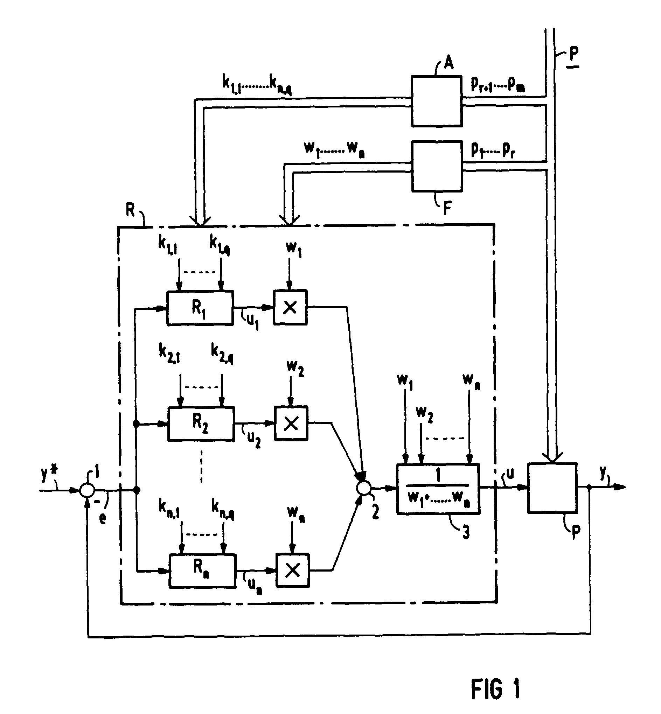

In dem Blockschaltbild gemäß Figur 1 ist mit P ein Eingrößenprozeß bezeichnet, d.h. ein Prozeß mit nur einer Stellgröße u und nur einer Meß- bzw. Regelgröße y. Die Erfindung kann natürlich auch bei Mehrgrößenprozessen mit mehreren Stellgrößen und mehreren Meßgrößen eingesetzt werden. Die Regelgröße y wird in einem Mischglied 1 von ihrem Sollwert y* subtrahiert, und es ergibt sich die Regelabweichung e, welche dem Reglerblock R zugeführt und dort zu der Stellgröße u des Prozesses verarbeitet wird. Der Reglerblock R enthält n separate Regler R1...Rn, die n ausgewählten Betriebspunkten des Prozesses zugeordnet und für diese ausgelegt sind. Die Regler R1 bis Rn können von beliebigem Typ sein, also beispielsweise konventionelle Regler mit P-, PI- oder PID-Verhalten, aber auch Zustandsregler oder dergleichen. Das Verhalten eines jeden Reglers wird durch seine Reglerparameter bestimmt. Im dargestellten Beispiel sei angenommen, daß jeder der Regler R1...Rn q einstellbare Reglerparameter aufweist, was beim Regler R1 mit $k_{1,1}$ bis $k_{1,q}$ und beim Regler $R_n$ mit $k_{n,1}...k_{n,q}$ angedeutet ist.

Die Ausgangssignale $u_1...u_n$ der n Regler R1...Rn werden mit Gewichtsfaktoren $w_1...w_n$ multipliziert und die so gewichteten Reglerausgangssignale in einem Mischglied 2 summiert. Auf diese Weise arbeiten die Regler R1...Rn parallel, und mit den Gewichten $w_1...w_n$ kann festgelegt werden, in welchem Maße die Regler zum Einfluß kommen. Grundsätzlich soll der Einfluß eines Reglers umso größer werden, je näher man sich im Prozeßverlauf an dem ihm zugeordneten Betriebspunkt befindet. Umgekehrt soll ein Regler umso weniger zum Zuge kommen, je weiter man sich von dem ihm zugeordneten Betriebspunkt entfernt, was letztlich zur völligen Abkopplung bzw. Abschaltung des betreffenden Reglers führen wird. Würden beispielsweise einer oder mehrere der Gewichtsfaktoren $w_1...w_n$ zu Null werden, dann ist der jeweils zugeordnete Regler praktisch abgeschaltet und nimmt am weiteren Regelungsgeschehen nicht mehr teil. Durch stetiges Verändern dieser Gewichtsfaktoren ist es möglich, die Zuschaltung eines Reglers bzw. dessen Ablösung beliebig weich, d.h. interpolierend vorzunehmen.

Da die Summe der Gewichtsfaktoren $w_1...w_n$ im allgemeinen ungleich 1 ist, wird zur Normierung die mit 3 bezeichnete Einrichtung vorgesehen, welche aus der Summe der gewichteten Reglerausgangssignale $u_1...u_n$ einen gewichteten Mittelwert entsprechend der Beziehung

$$u = (u_1.w_1 + u_2.w_2 + ... u_n.w_n)/(w_1 + w_2 + ... + w_n) \tag{1}$$

als Stellgröße u für den Prozeß P bildet. Damit ist sichergestellt, daß jeder Regler immer mit dem durch sein Gewicht im Verhältnis zur Gewichtssume bestimmten Anteil zur Wirkung gelangt. Die Realisierung des Mittelwertbildners 3 kann, wie aus vorstehender Beziehung (1) hervorgeht, in einem Dividierglied bestehen, dessen Dividendeneingang das Ausgangssignal des Mischgliedes 2 zugeführt ist, sowie in einem weiteren Mischglied zur Bildung der Summe der Gewichte $w_1...w_n$, dessen Ausgangssignal den Divisoreingang dieses Dividiergliedes beaufschlagt.

Während in dem Funktionsblock F die Bestimmung der Gewichtsfaktoren $w_1...w_n$ mit den das Prozeßverhalten dominant beeinflussenden Betriebspunktparametern $p_1...p_r$ in einer später noch eingehend beschriebenen Weise erfolgt, findet in dem Rechenblock A eine Anpassung der Parameter der für die ausgewählten Betriebspunkte optimierten Regler an Veränderungen von weiteren Betriebspunktparametern $p_{r+1}...p_m$ statt. Die Auswahl der Betriebspunktparameter, deren Veränderungen zur adaptiven Beeinflussung der Parameter $k_{1,1}...k_{n,q}$ der n Regler herangezogen werden, richtet sich nach den spezifischen Gegebenheiten des jeweiligen Prozesses. Es können sämtliche Parameter der Menge $\underline{P}$ der Betriebspunktparameter oder, wie im Beispiel gemäß Figur 1 dargestellt, nur ein Teil dieser Betriebspunktparameter sein, welcher die dominant das Prozeßverhalten beeinflussenden Parameter $p_1...p_r$ nicht umfaßt.

Die von der Adaptionseinrichtung A ausgegebenen Reglerparameter $k_{1,1}...k_{n,q}$ enthalten jeweils einen konstanten Anteil $a_{1,1,0}...a_{n,q,0}$, welcher für bestimmte Werte der Betriebspunktparameter $p_{r+1}...p_m$ und für die jedem Regler gemäß dem ihm zugeordneten Arbeitspunkt entsprechenden Werte der dominanten Betriebspunktparameter $p_1...p_r$ ein optimales Regelverhalten sicherstellt. Diese konstanten Reglerparameteranteile lassen sich aufgrund von Erfahrungswissen über den zu regelnden Prozeß oder aber in üblicher Weise empirisch, beispielsweise anhand eines Prozeßmodells oder mittels Prozeßsimulationen, finden. Auf dieselbe Art läßt sich ermitteln, wie bei Veränderungen der Betriebspunktparameter $p_{r+1}...p_m$ die Reglerparameter zu verändern sind, damit sich weiterhin optimales Regelverhalten ergibt.

Bei der Realisierung der Adaptionseinrichtung A wird davon ausgegangen, daß die zur optimalen Regelung erforderlichen Änderungen der Reglerparameter in der Nähe des jeweiligen Betriebspunktes linear von den Änderungen der Betriebspunktparameter abhängen. In der Adaptionseinrichtung werden daher die ihr zugeführten Werte der Betriebspunktparameter $p_{r+1}...p_m$ in folgender Weise zu den Reglerparametern $k_{1,1}...k_{n,q}$ verarbeitet:

$$
\begin{aligned}
k_{1,1} &= a_{1,1,0} + a_{1,1,r+1} * \Delta p_{r+1} \cdots a_{1,1,m} * \Delta p_m \\
k_{1,2} &= a_{1,2,0} + a_{1,2,r+1} * \Delta p_{r+1} \cdots a_{1,2,m} * \Delta p_m \\
\cdot \quad & \quad \cdot \qquad\qquad \cdot \qquad\quad * \Delta p_{r+1} \cdots \cdot \qquad\quad * \Delta p_m \\
\cdot \quad & \quad \cdot \qquad\qquad \cdot \qquad\quad * \Delta p_{r+1} \cdots \cdot \qquad\quad * \Delta p_m \\
\cdot \quad & \quad \cdot \qquad\qquad \cdot \qquad\quad * \Delta p_{r+1} \cdots \cdot \qquad\quad * \Delta p_m \\
k_{n,q} &= a_{n,q,0} + a_{n,q,r+1} * \Delta p_{r+1} \cdots a_{n,q,m} * \Delta p_m
\end{aligned}
\tag{2}
$$

wobei $\Delta p_{r+1}...\Delta p_m$ die in der Adaptionseinrichtung A gebildeten aktuellen Abweichungen von vorgegebenen Werten der Betriebspunktparameter $p_{r+1}...p_m$ sind und als konstante Koeffizienten $a_{i,j,r+s}$ jeweils das Verhältnis einer mittels Simulation gefundenen Reglerparameteränderung zu der zugeordneten Betriebsparameteränderung verwendet ist.

Es gilt beispielsweise für den Koeffizient, welcher die Auswirkung einer Änderung des Betriebspunktparameters $p_{r+1}$ auf den Reglerparameter $k_{n,q}$ (siehe Gleichungssystem (2)) bestimmt:

$$a_{n,q,r+1} = \frac{(\Delta k_{n,q})_{sim}}{(\Delta p_{r+1})_{sim}},$$

wobei der Index "sim" bedeutet, daß diese Werte mittels Simulation gefunden wurden.

Die Adaptionseinrichtung A realisiert also für jeden Reglerparameter ein lineares Adaptionsgesetz, mit welchem die Regler $R_1$ bis $R_n$ den Veränderungen der Betriebspunktparameter $p_{r+1}$ bis $p_m$ zum Erzielen eines optimalen Regelverhaltens angepaßt werden. Wie aus dem Gleichungssystem (2) hervorgeht, sind hier nur Differenzbildner zur Ermittlung der aktuellen Abweichungen $\Delta p_{r+1}...\Delta p_m$ von den den ausgewählten Betriebspunkten zugeordneten Werten der Parameter $p_{r+1}...p_m$, Proportionalverstärker, deren Verstärkungsgrad den konstanten Koeffizienten $a_{i,j,r+s}$ entspricht, und Summierglieder erforderlich. Anstelle dieser linearen Anpassung könnte auch fallweise eine nichtlineare Anpassung mit entsprechend größerem Aufwand vorgesehen werden.

Dem mit F bezeichneten Funktionsblock, dessen Ausgangssignale $w_1...w_n$ die Gewichtsfaktoren für die von den Reglern $R_1...R_n$ bereitgestellten Stellgrößen $u_1...u_n$ bilden, sind eingangsseitig die dominanten Betriebsparameter $p_1...p_r$ zugeführt. Er besteht im Prinzip aus n multivariablen Funktionsgeneratoren, d.h. n Funktionsgeneratoren mit jeweils einem Ausgang und mehreren Eingängen, die von den dominanten Betriebspunktparametern $p_1...p_r$ beaufschlagt sind. Vorteilhaft läßt sich der Funktionsblock F mit unscharfer Logik, z.B. mit Fuzzy-Logik, realisieren, weil sich damit komplexe Verkoppelungen der Eingangsgrößen unter Verwertung von Erfahrungswissen über den Prozeß praxisgerecht auflösen lassen. Unscharfe Logik und ihre Anwendung sind beispielsweise in der DE-Zeitschrift "Automatisierungstechnische Praxis" 33 (1991), Heft 10, Seiten 504 bis 510, beschrieben.

Bei Realisierung des Funktionsblockes F mittels unscharfer Logik implementiert er die für die unscharfe Logik typischen Zugehörigkeitsfunktionen (membership functions), und zwar werden für jeden Betriebspunktparameter $p_1$ bis $p_r$ n Zugehörigkeitsfunktionen vorgesehen, die den n Betriebspunkten zugeordnet sind.

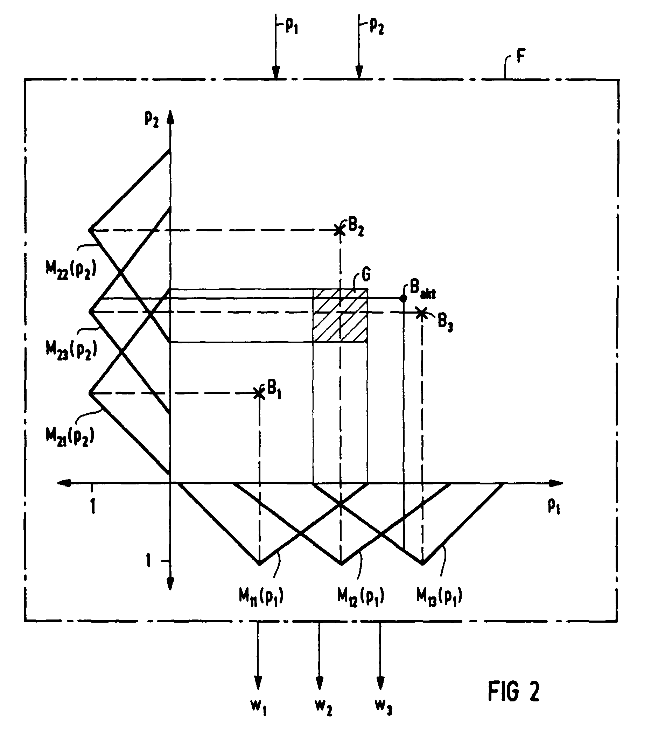

Figur 2 dient zur Erläuterung von Aufbau und Wirkungsweise des mit unscharfer Logik arbeitenden Funktionsblocks F an einem übersichtlich gehaltenen Beispiel mit r = 2 dominanten Betriebspunktparametern $p_1$ und $p_2$ als Eingangsgrößen und für n = 3 ausgewählte Betriebspunkte $B_1$, $B_2$ und $B_3$. Diesen ist jeweils eine Zugehörigkeitsfunktion mit der Variablen $p_1$, nämlich $M_{11}(p_1)$, $M_{12}(p_1)$ und $M_{13}(p_1)$, sowie der Variablen $p_2$, nämlich $M_{21}(p_2)$, $M_{22}(p_2)$ und $M_{23}(p_2)$, in der Weise zugeordnet, daß diese Funktionen jeweils im zugehörigen Betriebspunkt ihren maximalen Wert von 1 aufweisen. Sie können, wie dargestellt, dreieckförmige Verläufe haben, jedoch sind z.B. auch trapez-, parabel- oder glockenförmige Verläufe möglich. Wesentlich ist in diesem Zusammenhang nur, daß die Zugehörigkeitsfunktionen mit wachsendem Abstand von dem ihnen jeweils zugeordneten Betriebpunkt stetig abnehmen und sich dabei überlappen, damit nicht abrupt sondern interpolierend "weich" zwischen den Reglern umgeschaltet wird. Bei den in der Figur 2 dargestellten Dreieckfunktionen legen deren Basen fest, in welchem Gebiet der zugeordnete Regler wirksam werden kann. Im allgemeinen sind mehrere Regler mit unterschiedlicher Gewichtung gleichzeitig aktiv, d.h. die entsprechenden, die Gewichtsfaktoren $w_1$, $w_2$ und $w_3$ bildenden Ausgangsgrößen des Funktionsblocks F weisen einen von Null verschiedenen Wert auf. So wären in dem in Figur 2 schraffierten Bereich G alle drei Regler im Eingriff und in den Betriebspunkten $B_2$ und $B_3$ die Regler $R_2$ und $R_3$, während im Betriebspunkt $B_1$ nur der Regler $R_1$ zur Wirkung gelangt.

Mit der Terminologie der unscharfen Logik lassen sich die von dem Funktionsblock F zu verwirklichenden Regeln für die Beteiligung der drei Regler $R_1$, $R_2$ und $R_3$ folgendermaßen formulieren:

$$\text{IF}(p_1 \text{ is } M_{11}) \text{ AND } (p_2 \text{ is } M_{21}) \text{ THEN } (R_1 \text{ aktiv})$$

$$\text{IF}(p_1 \text{ is } M_{12}) \text{ AND } (p_2 \text{ is } M_{22}) \text{ THEN } (R_2 \text{ aktiv})$$

$$\text{IF}(p_1 \text{ is } M_{13}) \text{ AND } (p_2 \text{ is } M_{23}) \text{ THEN } (R_3 \text{ aktiv}),$$

wobei die Wahrheitswerte der THEN-Aussagen, das sind die Beteiligungsgrade bzw. Gewichtsfaktoren $w_1$, $w_2$ und $w_3$ der Regler $R_1$, $R_2$ und $R_3$ nach den Verknüpfungsregeln der unscharfen Logik z.B. ermittelt werden zu

$$w_1 = \text{Min} \left[M_{11}, M_{21}\right]$$
$$w_2 = \text{Min} \left[M_{12}, M_{22}\right] \qquad (3)$$
$$w_3 = \text{Min} \left[M_{13}, M_{23}\right]$$

Für den beispielhaft angenommenen aktuellen Betriebspunkt $B_{akt}$ würde die Auswertung der in Figur 2 dargestellten Zugehörigkeitsfunktionen entsprechend dem Gleichungssystem (3) folgende konkrete Werte ergeben für $B_{akt}$:

$$w_1 = \text{Min} [0 , 0.11] = 0$$

$$w_2 = \text{Min} [0.42 , 0.37] = 0.37$$

$$w_3 = \text{Min} [0.84 , 0.89] = 0.84.$$

Am aktuellen Betriebspunkt $B_{akt}$ wirkt also der dem Betriebspunkt $B_2$ zugeordnete Regler mit dem Gewicht 0,37 und der dem Betriebspunkt $B_3$ zugeordnete Regler mit dem Gewicht 0,84.

Wie der Figur 2 und dem Gleichungssystem (3) zu entnehmen ist, kann bei diesem Beispiel der Funktionsblock F mit sechs Funktionsgeneratoren und drei Minimumschaltungen aufgebaut werden. Statt dessen können auch handelsüblich erhältliche Fuzzy-Logik-Bausteine in integrierter Form oder unscharfe Rechner (fuzzy computer) verwendet werden, genauso wie es sich beim heutigen Stande der Technik fallweise empfehlen wird, auch die Funktionen des Reglerblocks R und der Adaptionseinrichtung A nicht mittels diskreter Bauelemente sondern mittels Mikroprozessoren zu implementieren.

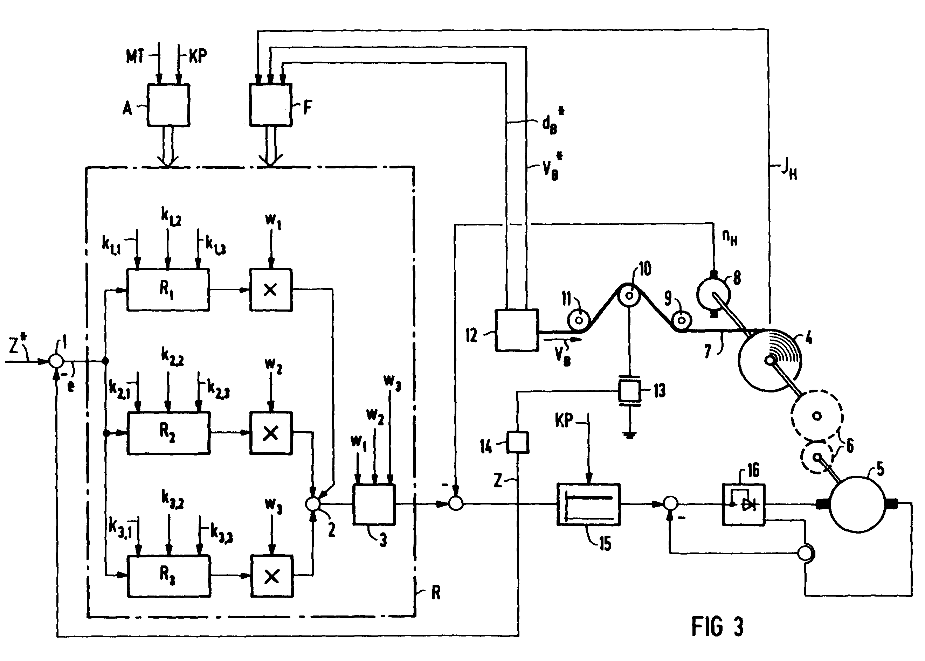

Figur 3 zeigt ein Anwendungsbeispiel des erfindungsgemäßen Verfahrens für die Bandzugregelung eines Haspelantriebs. Im einzelnen ist ein elektrischer Antriebsmotor 5 dargestellt, welcher über ein Getriebe 6 mit der Haspel 4 gekuppelt ist. Die bandförmige Materialbahn 7 ist über eine Umlenkrolle 10 sowie über Führungsrollen 9 und 11 geführt und verläßt eine mit 12 bezeichnete Einrichtung, welche z.B. in einer Abwickelhaspel oder einem Walzgerüst bestehen kann, mit der Geschwindigkeit $V_B$. Mittels der Umlenkrolle 10 wird der Bandzug erfaßt, indem sich deren Lager auf eine Druckmeßdose 13 abstützt und ein an ihre Ausgangsklemmen geschalteter Verstärker 14 eine dem Bandzug proportionale Gleichspannung z liefert. Diese wird in dem Mischglied 1 mit einer dem gewünschten Sollwert des Zuges z* proportionalen Gleichspannung verglichen und das Ausgangssignal des Mischgliedes dem Reglerblock R zugeführt. Dem Bandzugregler R ist ein Drehzahlregler 15 unterlagert, indem die Ausgangsgröße des Bandzugreglers dessen Sollwert bildet. Sein Istwert die von einem Tachodynamo 8 gelieferte, der Haspeldrehzahl proportionale Gleichspannung $n_H$. Der Drehzahlregler 15 weist die Proportionalverstärkung KP auf. Diesem wiederum ist ein Regler 16 für den Strom des Antriebsmotors 5 unterlagert.

Die Bandzugregeleinrichtung entspricht mit ihren Elementen R, A, F im Prinzip den gleich bezeichneten Elementen der Figur 1.

Als dominante Betriebsparameter sind das Trägheitsmoment $J_H$ der Haspel, die Banddicke und die Austrittsgeschwindigkeit des Bandes aus dem Walzgerüst 12 vorgesehen, wobei nicht die mit Störungen behafteten Istwerte der beiden letztgenannten Größen dem Funktionsblock F zugeführt sind, sondern deren Sollwerte $d_B^*$ und $v_b^*$. Damit wird eine Beruhigung der Zugregelung erreicht. Als weitere Betriebspunktparameter sind eine der Materialhärte entsprechende Größe MT und eine der Proportionalverstärkung des Haspeldrehzahlreglers 15 entsprechende Größe KP der Adaptionseinrichtung A zugeführt.

Bei Bedarf kann sowohl die Anzahl der als dominant berücksichtigten Betriebspunktparameter als auch die Anzahl der weiteren Betriebspunktparameter fast beliebig vergrößert werden, wobei durch das erfindungsgemäße Verfahren sichergestellt wird, daß die Regelung trotz dadurch steigender Komplexität handhabbar bleibt.

**Patentansprüche**

1. Verfahren zur Regelung technischer Prozesse unter Verwendung von mehreren, ausgewählten Betriebspunkten zugeordneten, parallel arbeitenden und diesbezüglich optimierten Reglern ($R_1...R_n$), wobei in Abhängigkeit von das Prozeßverhalten dominant beeinflussenden Betriebspunktparametern ($p_1...p_r$) eine gewichtete Aktivierung

($w_1...w_n$) dieser Regler erfolgt.

**2.** Verfahren nach Anspruch 1, **dadurch gekennzeichnet**, daß die Ausgangssignale ($u_1...u_n$) der Regler ($R_1...R_n$) mittels sich überlappender Zugehörigkeitsfunktionen einer unscharfen Logik in Abhängigkeit von den dominanten Betriebspunktparametern ($p_1...p_r$) gewichtet werden und aus der Summe der gewichteten Reglerausgangssignale und der Summe der dazugehörigen Gewichte ($w_1...w_n$) ein gewichteter Mittelwert gebildet wird, der als Stellgröße (u) auf den Prozeß (P) zur Wirkung gebracht wird.

**3.** Verfahren nach Anspruch 1 oder 2, **dadurch gekennzeichnet**, daß für die ausgewählten Betriebspunkte optimierte Parameter der Regler ($R_1...R_n$) den Veränderungen von insbesondere weiteren Betriebspunktparametern ($p_{r+1}...p_m$) linear angepaßt werden.

**4.** Verfahren nach einem der vorhergehenden Ansprüche, **dadurch gekennzeichnet**, daß zur Zugregelung bei einer Bandhaspel (4) als dominante Betriebspunktparameter das Trägheitsmoment ($J_H$) der Haspel (4), die Banddicke und die Bandgeschwindigkeit verwendet werden.

**5.** Verfahren nach Anspruch 4, **dadurch gekennzeichnet**, daß als dominante Betriebspunktparameter die Sollwerte von Banddicke ($d_B$*) und Bandgeschwindigkeit ($v_B$*) verwendet werden.

**6.** Verfahren nach Anspruch 4 oder 5, **dadurch gekennzeichnet**, daß als weiterer Betriebspunktparameter die Materialhärte (MT) des Wickelgutes verwendet wird.

**7.** Verfahren nach einem der Ansprüche 4 bis 6 für Zugregelungen mit unterlagerter Drehzahlregelung, **dadurch gekennzeichnet**, daß als weiterer Betriebspunktparameter die Proportionalverstärkung (KP) des Drehzahlreglers (15) verwendet wird.

## Claims

**1.** Method for closed-loop control of technical processes using a plurality of controllers ($R_1 ... R_n$) which are allocated to selected operating points, work in parallel and are optimised with regard to this, wherein as a function of operating point parameters ($p_1 ... p_r$) which influence the process performance in a dominant manner, a weighted activation ($w_1 ...w_n$) of these controllers takes place.

**2.** Method according to claim 1, characterised in that the output signals ($u_1 ... u_n$) of the controllers ($R_1 ... R_n$) are weighted by means of overlapping membership functions of a fuzzy logic as a function of the dominant operating point parameters ($p_1 ... p_r$) and from the sum of the weighted controller output signals and the sum of the associated weights ($w_1 ... w_n$) a weighted average value is formed, which is brought to effect on the process (P) as a manipulated variable (u).

**3.** Method according to claim 1 or 2, characterised in that parameters of the controllers ($R_1 ... R_n$) that have been optimised for the selected operating points are linearly adapted to the changes in further operating point parameters ($p_{r+1} ... p_m$) in particular.

**4.** Method according to one of the preceding claims, characterised in that for the tension control of a tape reel (4), the moment of inertia ($J_H$) of the reel (4), the tape thickness and the tape velocity are used as dominant operating point parameters.

**5.** Method according to claim 4, characterised in that the setpoint values of tape thickness ($d_B$*) and tape velocity ($v_B$*) are used as dominant operating point parameters.

**6.** Method according to claim 4 or 5, characterised in that the material hardness (MT) of the winding material is used as a further operating point parameter.

**7.** Method according to one of the claims 4 to 6 for tension control with subordinate speed control, characterised in that the proportional gain (KP) of the speed controller (15) is used as a further operating point parameter.

**Revendications**

1. Procédé de régulation de processus techniques en utilisant plusieurs régulateurs ($R_1$ à $R_n$) associés à des points de fonctionnement sélectionnés, fonctionnant en parallèle et optimisés à cet effet, dans lequel on effectue, en fonction des paramètres ($p_1$ à $p_r$) de points de fonctionnement influençant de manière dominante le comportement du processus, une activation pondérée ($w_1$ à $w_n$) de ces régulateurs.

2. Procédé suivant la revendication 1, caractérisé en ce que l'on pondère les signaux ($u_1$ à $u_n$) de sortie des régulateurs ($R_1$ à $R_n$) au moyen de fonction d'appartenance se chevauchant d'une logique floue en fonction des paramètres ($p_1$ à $p_r$) dominants de points de fonctionnement et on forme, à partir de la somme des signaux de sortie pondérés des régulateurs et de la somme des poids associés ($w_1$ à $w_n$), une valeur moyenne pondérée, que l'on amène à agir sur le processus (p) en tant que grandeur (u) réglante.

3. Procédé suivant la revendication 1 ou 2, caractérisé en ce que l'on adapte linéairement des paramètres des régulateurs ($R_1$ à $R_n$) optimisés pour les points de fonctionnement sélectionnés aux changements notamment d'autres paramètres ($p_{r+1}$ à $p_m$) de points de fonctionnement.

4. Procédé suivant l'une des revendications précédentes, caractérisé en ce que l'on utilise pour réguler la traction dans un treuil (4) de bande, comme paramètres dominants de points de fonctionnement, le moment ($J_H$) d'inertie du treuil (4), l'épaisseur de la bande et la vitesse de la bande.

5. Procédé suivant la revendication (4), caractérisé en ce que l'on utilise, comme paramètres dominants de points de fonctionnement, les valeurs de consigne de l'épaisseur ($d_B{}^*$) de la bande et de la vitesse ($v_B{}^*$) de la bande.

6. Procédé suivant la revendication 4 ou 5, caractérisé en ce que l'on utilise, comme autre paramètre, de points de fonctionnement, la dureté (MT) de la matière à enrouler.

7. Procédé suivant l'une des revendications 4 à 6 pour la régulation de la traction avec réglage en cascade de la vitesse de rotation,
caractérisé en ce que l'on utilise comme autre paramètre de points de fonctionnement, le gain (KP) proportionnel du régulateur (15) de vitesse de rotation.

FIG 1

FIG 2

FIG 3

EP 0 554 479 B1